# EUROPÄISCHE PATENTSCHRIFT

(11) **EP 1 193 121 B1**
(45) Veröffentlichungstag und Bekanntmachung des Hinweises auf die Patenterteilung: **30.10.2002**
(21) Anmeldenummer: 00120592.1
(22) Anmeldetag: 20.09.2000
(51) Int. Cl.: B60P 1/44

(54) **Unterfahrbare Hubladebühne mit Plattformaufhängung**
Suspended platform for a loading tailgate
Hayon élévateur avec plate-forme suspendue

(43) Veröffentlichungstag der Anmeldung: 03.04.2002
(73) Patentinhaber: Gerd Bär GmbH, 74078 Heilbronn (DE)
(72) Erfinder: Falk, Markus, 74629 Pfedelbach (DE)
(74) Vertreter: KOHLER SCHMID + PARTNER

(56) Entgegenhaltungen:
- EP-A- 0 662 405
- PATENT ABSTRACTS OF JAPAN vol. 2000, no. 07, 29. September 2000 (2000-09-29) & JP 2000 108761 A (KYOKUTO KAIHATSU KOGYO CO LTD), 18. April 2000 (2000-04-18)
- PATENT ABSTRACTS OF JAPAN vol. 2000, no. 07, 29. September 2000 (2000-09-29) & JP 2000 108764 A (KYOKUTO KAIHATSU KOGYO CO LTD), 18. April 2000 (2000-04-18)

## Beschreibung

Die Erfindung betrifft eine unterfahrbare Hubladebühne zur Befestigung an einem Fahrzeug, mit einem parallelogrammförmigen Hubwerk zum Heben und Senken einer zu einem Plattformpaket zusammenfaltbaren Plattform und mit zwei parallelen Führungsschienen, an denen das Hubwerk hängend gehalten und zwischen einer Verstauposition und einer Arbeitsposition verfahrbar ist.

Unterfahrbare Hubladebühnen werden auf verschiedene Arten in der Verstauposition gegen Absenken gesichert:
- durch einen mechanischen Verschluß, der beim manuellen Schließen das Plattformpaket und den höhenbeweglichen Teil des Hubwerks gegen Absenken sichert;
- durch einen mechanischen Verschluß, der sich beim Hochfahren gegen das Fahrgestell oder den Aufbau automatisch einhängt. Zum Senken muß dieser Verschluß manuell geöffnet werden;
- durch auf beiden Seiten des Aufbaus angebrachte U-Profile, in welche das Plattformpaket von der Arbeits- in die Verstauposition einfährt und damit gesichert ist;
- durch das einfache Gegenfahren durch die Hubfunktion gegen zwei am Fahrgestell oder Aufbau angebrachte Rammgummis. Die Sicherung gegen das Absenken erfolgt durch die in den Hubzylindern befindlichen, selbstschließenden Ventile;
- durch horizontal am Fahrgestell oder Aufbau angebrachte Dorne mit konischem Einführteil, welche beim Einfahren in die Verstauposition in Befestigungselemente mit entsprechender Bohrung einfahren.

Bei den Techniken mit dem Verschluß muß dieser manuell bedient werden. Er ist aber nur zu bedienen, wenn dieser spannungsfrei ist, d.h. der Bedienende muß, wenn die Hydraulik etwas nachgelassen hat (was die Regel ist), insbesondere wenn die Hubladebühne mehrere Tage nicht benutzt wird, die Hubfunktion so weit bedienen, daß der Verschluß spannungsfrei ist. Daraus folgt, daß selbst die Verschlußtechniken Luft haben müssen, welche das Ausschlagen fördert. Bei der Ausführung mit Dornen besteht das Problem, daß die fahrzeugseitige Aufhängung separat zu schaffen ist, auch dann, wenn diese am Führungswerk angebracht wird, also einen zusätzlichen Aufwand bedeutet. Aufgrund der großen Abstände entstehen ungünstige Hebelwirkungen, weshalb diese Techniken schwer gebaut werden müssen und trotzdem leichter beschädigbar sind. Bei der Version, bei welcher die Plattform nur gegen die Gummipuffer gefahren wird, besteht beim Nachlassen der Hydraulik Luft zwischen der Plattform und dem Anschlagpuffer. Durch den Fahrbetrieb schwingt die Plattform samt den höhenveränderlichen Teilen des Hubwerks und führt so zum Ausschlagen der Lager und zu vorzeitigem Verschleiß.

Unterfahrbare Hubladebühnen werden in der Regel durch einen einfachen oder nebeneinander liegenden Tandemzylinder, der mittig angreift, verfahren. Aufgrund der einbautechnischen Erfordernisse liegt der Schwerpunkt der zu verfahrenden Hubladebühne weit außerhalb der Führung. Diese kann aufgrund der vorhandenen Einbauräume auch nur eine beschränkte Länge haben. Dadurch sind die Anpreßkräfte durch das Eigengewicht beträchtlich. Dadurch neigt der verfahrbare Teil der Hubladebühne zum Verecken/Aufschwingen. Dieses Problem ist nur durch eine entsprechend lange Führung, welche die Gesamtlänge der verstauten Hubladebühne vergrößert, möglich. Dieses Problem kann auch dadurch gelöst werden, daß die seitliche Führung nur auf einer Seite erfolgt und dort auch der Verschiebezylinder angeordnet ist. Diese Technik erfordert eine relativ aufwendige und vor allen Dingen unterschiedliche Führung. Eine weitere sichere Lösung ist auch der mechanische Gleichlauf durch Zahnstange und Zahnrad an den Führungsschienen, welche durch eine Welle starr verbunden sind.

Durch Fertigungs- und Montageungenauigkeiten entstehen deshalb in den Führungen unterschiedliche Widerstände, welche zur Verkantung führen, so daß die Hubladebühne schwankend und aufschwingend ein- und ausfährt. Um dieses Problem in den Griff zu bekommen, muß eine relativ große Führungslänge gewählt werden, welche die Gesamteinbaulänge der verstauten Hubladebühne unnötig vergrößert und daher die Einbaubarkeit schmälert. Alle bisherigen Techniken außer dem mechanischen Gleichlauf lassen nur relativ kleine Verfahrgeschwindigkeiten zu. Die relativ sichere Lösung des mechanischen Gleichlaufes mit Zahnstange/Zahnradausgleichswelle ist teuer und aufwendig und vergrößert das gesamte Hubwerkspaket in vertikaler Richtung, welches die Anbaubarkeit an niedrige Fahrzeuge durch zu geringe Bodenfreiheit reduziert.

Es ist daher die Aufgabe der Erfindung, bei einer unterfahrbaren Hubladebühne die Plattformaufhängung und/oder die Plattformführung zu verbessern.

Diese Aufgabe wird erfindungsgemäß dadurch gelöst, daß an der Oberseite des gefalteten Plattformpakets mindestens zwei Tragelemente vorgesehen sind, die in der Verstauposition der Hubladebühne jeweils an den beiden Führungsschienen hängend gehalten sind und/oder daß an der Oberseite des gefalteten Plattformpakets mindestens zwei Führungselemente vorgesehen sind, die das Plattformpaket beim Einfahren der Hubladebühne in die Verstauposition jeweils an den beiden Führungsschienen führen.

Vorzugsweise sind, gesehen in Verstaurichtung, die mindestens zwei Tragelemente am möglichst hintersten Ende des gefalteten Plattformpakets und die mindestens zwei Führungselemente am möglichst vordersten Ende des gefalteten Plattformpakets vorgesehen.

Erfindungsgemäß wird vorgeschlagen, am Plattformpaket jeweils ein Tragelement und in Verstaurichtung davor ein Führungselement pro Führungsschiene zu befestigen, die beim Einfahren der Hubladebühne jeweils in den offenen Querschnitt der Führungsschiene einfahren. Aufgrund der Größe der Führungsschiene können Trag- und Führungselemente kräftig gebaut sein, die auch bei nicht höhengleichem Anfahren Kollisionen beschädigungslos vertragen.

Durch die Führungselemente am vorderen Ende des Plattformpakets erfolgt beim Einfahren der Hubladebühne in die Verstauposition nach wenigen Zentimetern eine Führung der gesamten Hubladebühne, wodurch die Gesamtführungslänge der Hubladebühne vergrößert ist. Die Hubladebühne fährt auch bei unterschiedlichen Reibungen an der Führungsschienen sauber und ruhig ein. Kurz vor dem vollständigen Einfahren führen auch noch die beiden Tragelemente. So können die gleich kurze Führungslänge des Führungsschlittens wie beim mechanischen Gleichlauf beibehalten und auch die gleich hohen Ein- und Ausfahrgeschwindigkeiten gewählt werden.

Bei der erfindungsgemäßen Hubladebühne ist das Plattformpaket samt der höhenveränderbaren Teile des Hubwerks am Fahrzeug bereits durch das über die Tragelemente an den Führungsschienen lastende Gewicht des Plattformpakets gegen Verschieben gesichert, so daß das gesamte Hubwerkpaket auch bei Undichtheiten im Hydrauliksystem dauerhaft gesichert ist. Das Gegenstück zu den Trag- und Führungselementen ist durch die Führungsschiene gebildet. Die Erfindung stellt daher für die Verstauposition eine preisgünstige, robuste und lebensdauererhöhende Sicherung der unterfahrbaren Hubladebühne dar. Durch die Verwendung gleicher Trag- und Führungselemente am vorderen und hinteren Ende des Plattformpakets wird ein ruhiges, schwingungs- und schwankungsfreies Verfahren der Hubladebühne bei hoher Geschwindigkeit und kurzen Führungsschlitten möglich. Dies spart dem Bediener Zeit und dem Hersteller die Kosten für den mechanischen Gleichlauf und vergrößert den notwendigen Einbauraum nicht.

Um Ungenauigkeiten in der Höhe, die der Bedienende durch Heben oder Senken nach Augenmaß anfährt, und seitliche Ungenauigkeiten auszugleichen, weisen die Tragelemente und/oder die Führungselemente jeweils vertikale und/oder seitliche Führungsschrägen auf, mittels denen das Hubwerk beim Verfahren in die Verstauposition jeweils an den Führungsschienen vertikal bzw. seitlich ausgerichtet wird. Dadurch wird das Plattformpaket samt höhenveränderlichen Hubwerksteilen höhenmäßig und seitlich zentriert und ist in der eingefahrenen Verstauposition mit nur geringem Spiel in den Führungsschienen gesichert.

Um ein eventuelles Aufschwingen und Schlagen des verstauten Plattformpakets z.B. bei schlechter Wegstrecke zu verhindern, weisen die Tragelemente und/oder die Führungselemente jeweils eine obere Anlagefläche zur Anlage an der Unterseite der Führungsschienen auf.

Bei bevorzugten Ausführungsformen sind die die Tragelemente und/oder die Führungselemente jeweils an mindestens einer Seitenwand der Führungsschienen geführt.

Bevorzugt sind die Tragelemente und/oder die Führungselemente zumindest an den mit den Führungsschienen zusammenwirkenden Auflage- bzw. Anlagebereichen aus reibungsarmem Material gebildet. Sie können z.B. aus Kunststoff hergestellt sein, der die Restschwingungen dämpft und das Plattformpaket annähernd verschleißlos in der Querebene zur Verfahrrichtung sichert. Die Tragelemente und die Führungselemente können Kunststoffspritzteile sein.

In anderen Ausführungsformen können die die Tragelemente und/oder die Führungselemente um eine vertikale oder horizontale Achse drehbar gelagert sein.

Vorzugsweise sind Führungsschienen jeweils nach unten offene C-Profile oder einander zugewandte L- oder U-förmige Profile.

Es wird ausdrücklich darauf hingewiesen, daß die Tragelemente zusätzlich auch zur Führung des Plattformpakets und die Führungselemente zusätzlich auch zum Tragen des Plattformpakets verwendet werden können.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: ein Ausführungsbeispiel der erfindungsgemäßen unterfahrbaren Hubladebühne, eingefahren in ihre Verstauposition unterhalb des Fahrzeugs, in einer Seitenansicht;
- Fig. 2: die Hubladebühne der Fig. 1, ausgefahren in ihre Arbeitsstellung, in einer Darstellung analog zu Fig. 1;
- Fig. 3: eine Schnittansicht durch ein Tragelement des Plattformpakets gemäß III-III in Fig. 3; und
- Fig. 4: eine Schnittansicht durch das Tragelement gemäß IV-IV in Fig. 3.

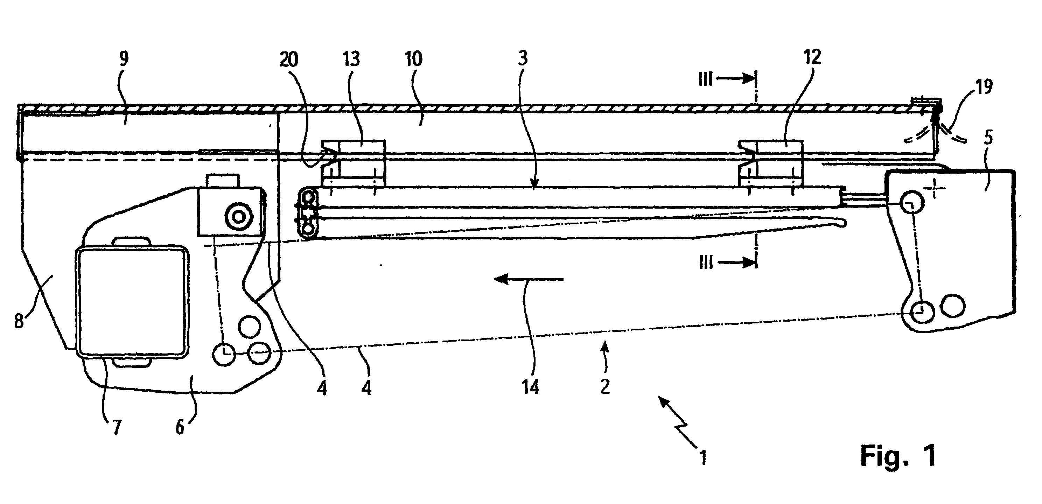

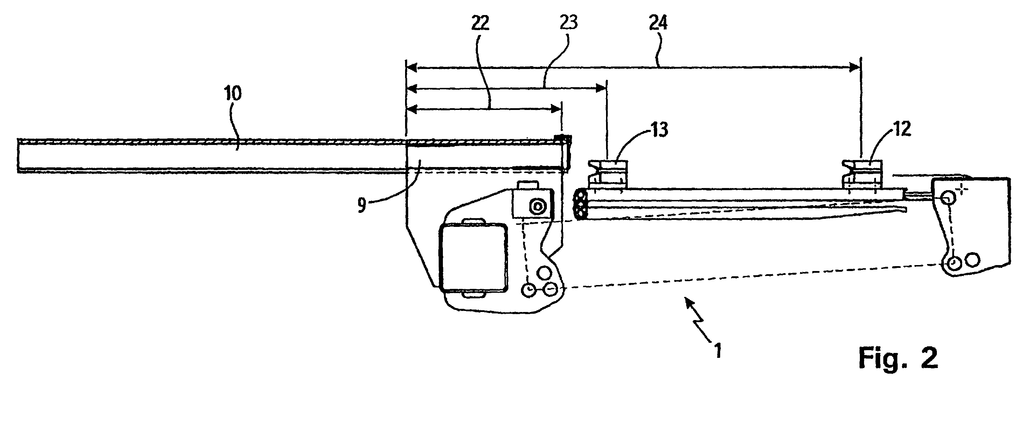

Die in Fig. 1 in ihrer Befestigungslage an der Rückseite eines Fahrzeugs gezeigte unterfahrbare Hubladebühne **1** umfaßt zwei parallel nebeneinander angeordnete, parallelogrammförmige Hubwerke **2** zum Heben und Senken einer zu einem Plattformpaket **3** zusammenfaltbaren Plattform, wobei in der Seitenansicht der Fig. 1 das hintere Hubwerk 2 durch das vordere verdeckt ist. Mit **4** sind jeweils die Wirklinien der beiden Parallelogrammlenker des Hubwerks bezeichnet, die einenends an einem Anschlußkopf **5** der Plattform und anderenends über ein Befestigungselement **6** an einem querverlaufendes Tragrohr **7** befestigt sind. Das Tragrohr 7 ist an Schlittenplatten **8** zweier Führungsschlitten **9** befestigt, die jeweils in parallelen Führungsschienen **10** zwischen der Verstauposition (Fig. 1) und der Arbeitsposition (Fig. 2) verfahrbar sind. Der Abstand der beiden Führungsschiene 10 ist größer als der Fahrgestellrahmen, an dem sie befestigt werden. Eine entsprechende Beabstandung haben dann natürlich auch die beiden Hubwerke 2 mit ihren Teilen 6, 8 und 9. In der Verstauposition ist die Hubladebühne 1 unter das Fahrzeug verfahren. Nicht gezeigt ist die Befestigung der Führungsschienen 10 am Fahrzeug, der Verschiebezylinder, der die Hubladebühne zwischen Verstau- und Arbeitsposition aus- und einfährt, und die Hub- und Neigezylinder des Hubwerks.

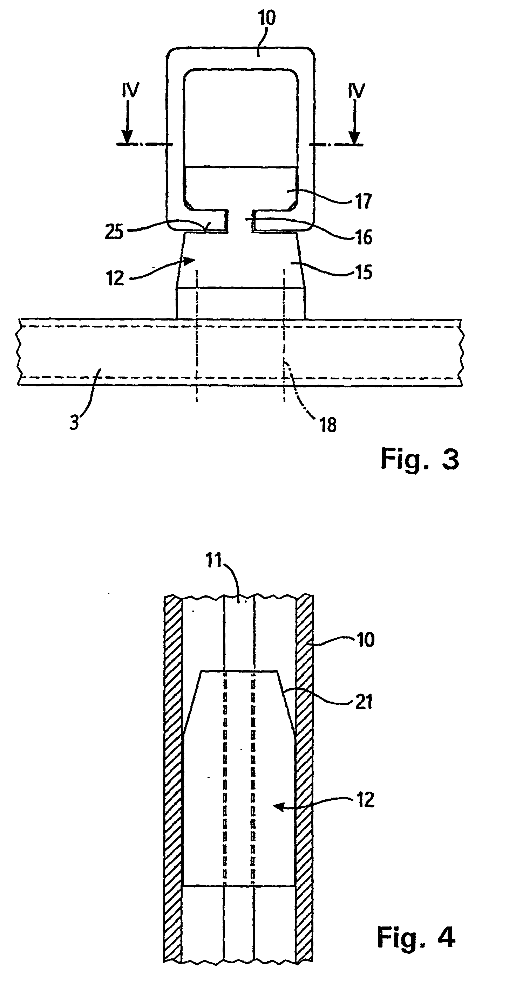

Die Führungsschienen 10 sind nach unten offene C-Profile (Fig. 3), in deren Hohlraum der Führungsschlitten 10 längsverschiebbar geführt ist, wobei die Schlittenplatte 9 durch den Längsspalt **11** (Fig. 4) der Führungsschiene 10 nach unten steht. Die gesamte Hubladebühne 1 ist somit an den beiden Führungsschienen 10 hängend gehalten.

An der Oberseite des gefalteten Plattformpakets 3 stehen jeweils ein Tragelement **12** und ein Führungselement **13** hoch, die in der Verstauposition jeweils in den beiden Führungsschienen 10 hängend gehalten sind. Das Tragelement 12 ist, gesehen in Verstaurichtung **14**, am hinteren Ende des Plattformpakets 3 und das Führungselement 13 am vorderen Ende angeordnet. Im gezeigten Ausführungsbeispiel sind die Tragund Führungselemente 12, 13 identisch mit einem Fuß **15**, einem schmaleren Mittelabschnitt **16** und einem verbreiterten Kopf **17** ausgebildet und mit dem unten als Befestigungsflansch ausgebildeten Fuß 15 über Befestigungsschrauben **18** an der Oberseite des Plattformpakets 3 befestigt. Die Halteund Führungselemente 12, 13 haben einen möglichst geringen Gleitwiderstand und sind z.B. aus Kunststoff gebildet.

Beim Einfahren der Hubladebühne 1 aus der Arbeitsposition (Fig. 2) in die Verstauposition (Fig. 1) fährt zunächst das Führungselement 13 und dann auch das Tragelement 12 jeweils mit ihren Köpfen 17 in den Hohlraum der Führungsschiene 10 ein, wobei ihr Mittelabschnitt 16 jeweils in den Längsspalt 11 der Führungsschiene 10 eingreift. Dabei wird jeweils eine die Führungsschiene stirnseitig abdeckende Gummiklappe **19** weggeschwenkt. In der Verstauposition wird das gesamte Gewicht der Hubladebühne 1 durch die Führungsschlitten 9 und die Trag- und Führungselemente 12, 13 getragen, die jeweils mit ihren Köpfen 17 innen auf der Führungsschiene 10 aufliegen. Führungsschlitten 9 und Trag- und Führungselemente 12, 13 sind so angeordnet, daß keine Hebelkräfte entstehen und diese Bauteile nur das Gewicht der Hubladebühne 1 zu tragen haben.

Um beim Einfahren der Hubladebühne 1 einen höhenmäßigen Versatz, der beim vertikalen Anfahren der Plattform mit den höhenveränderlichen Teilen des Hubwerks 2 auf die Höhe der Führungsschienen 10 auftreten kann, sowie einen möglichen seitlichen Versatz auszugleichen, haben die Trag- und Führungselemente 12, 13 oben und unten vertikal wirkende Einführschrägen **20** sowie auf beiden Seiten seitlich wirkende Einführschrägen **21** (Fig. 4). Sobald die Hubladebühne 1 soweit eingefahren ist, daß die Trag- und Führungselemente 12, 13 mit ihren parallelen Seitenflächen jeweils innen an den beiden Seitenwänden der Führungsschiene 10 anliegen und dadurch geführt sind, kann die Hubladebühne 1 beim weiteren Einfahren in den Führungschienen 10 nicht mehr anecken und läuft exakt parallel in die Führungschienen 10 ein.

Beim Verfahren der Hubladebühne nach hinten in die Arbeitsposition (Fig. 2) verläßt zuerst das Tragelement 12 und danach auch das Führungselement 13 die Führungsschiene 10, wobei die Gummiklappe 19 jeweils weggeschwenkt wird. Um die Hubladebühne 1 in ihre verfahrbahre Arbeitsstellung zu bringen, wird das Hubwerk 2 mit den Parallelogrammlenkern 4 abgesenkt und das Plattformpaket entfaltet. Dieser Vorgang ist nicht dargestellt.

Ohne die Trag- und Führungselemente 12, 13 hat die Hubladebühne 1 nur die Führungslänge **22** des Führungsschlittens 9. Beim Ein- oder Ausfahren ist diese kurze Führungslänge 22 nur so lange gegeben, wie die Trag- und Führungselemente 12, 13 sich noch nicht oder nicht mehr in den Führungsschienen 10 befinden. Durch Eintauchen der Führungselemente 13 in die Führungsschienen 10 wird die Führungslänge auf die Führungslänge **23** erheblich vergrößert. Der Abstand zwischen den Führungslängen 22 und 23 beträgt in der Praxis maximal ca. 10 bis 20 cm, so daß innerhalb dieser kurzen Strecke ein Anekken und ein seitliches Aufschwingen in den Führungsschienen 10 aufgrund z.B. unterschiedlicher Reibung an den Führungsschlitten 9 noch unproblematisch. Bevor ein Aufschwingen stattfinden kann, wird durch Eintauchen der Führungselemente 13 in die Führungsschienen 10 die Führungslänge auf die Länge 23 erheblich vergrößert.

Noch weiter verbessert sich die Situation, wenn die Tragelemente 12 ebenfalls in die Führungsschiene 10 einfahren, wodurch sich die Führungslänge auf die Länge **24** vergrößert. Diese Tragelemente 12 haben führungsmäßig allerdings eine untergeordnete Funktion, denn sie dienen dazu, das Plattformpaket 3 mit den höhenveränderlichen Teilen der Hubladebühne 2 in vertikaler Richtung an den Führungsschienen 10 zu fixieren. Dabei verhindert der auf der Führungsschiene 10 aufliegende Kopf 17 des Tragelements 12 die Sicherung gegen ein Absenden des Hubwerks 2 aufgrund undichter Ventile oder Fehlbedienung. Das Plattformpaket 3 und die höhenveränderlichen Teile des Hubwerks 2 werden hebelfrei durch die Tragund Führungselemente 12, 13 gehalten. Ein eventuelles Aufschwingen und Schlagen bei schlechter Wegstrecke ist durch Anlage der Oberseite **25** des Fußes 15 von unten an der Führungsschiene 10 verhindert.

Obwohl in der Zeichnung nicht dargestellt, können die Tragund Führungselemente 12, 13 um ihre vertikale Achse drehbar gelagert sein, wobei über diese Achse die Trag- und Führungselemente 12, 13 an dem Plattformpaket 3 befestigt sind.

## Patentansprüche

1. Unterfahrbare Hubladebühne (1) zur Befestigung an einem Fahrzeug, mit einem parallelogrammförmigen Hubwerk (2) zum Heben und Senken einer zu einem Plattformpaket (3) zusammenfaltbaren Plattform und mit zwei parallelen Führungsschienen (10), an denen das Hubwerk (2) hängend gehalten und zwischen einer Verstauposition und einer Arbeitsposition verfahrbar ist,
**dadurch gekennzeichnet,**
**daß** an der Oberseite des gefalteten Plattformpakets (3) mindestens zwei Tragelemente (12) vorgesehen sind, die in der Verstauposition der Hubladebühne (1) jeweils an den beiden Führungsschienen (10) hängend gehalten sind.

2. Hubladebühne nach Anspruch 1, **dadurch gekennzeichnet, daß** die beiden Tragelemente (12) am hinteren Ende des gefalteten Plattformpakets (3) vorgesehen sind.

3. Hubladebühne gemäß Oberbegriff von Anspruch 1,
**dadurch gekennzeichnet,**
**daß** an der Oberseite des gefalteten Plattformpakets (3) mindestens zwei Führungselemente (13) vorgesehen sind, die das Plattformpaket (3) beim Einfahren der Hubladebühne (1) in die Verstauposition jeweils an den beiden Führungsschienen (10) führen.

4. Hubladebühne nach Anspruch 3, **dadurch gekennzeichnet, daß** die beiden Führungselemente (13) am vorderen Ende des gefalteten Plattformpakets (3) vorgesehen sind.

5. Hubladebühne nach einem der vorhergehenden Ansprüche, **dadurch gekennzeichnet, daß** die Tragelemente (12) und/oder die Führungselemente (13) jeweils vertikale und/oder seitliche Führungsschrägen (20; 21) aufweisen, mittels denen das Hubwerk (2) beim Verfahren in die Verstauposition jeweils an den Führungsschienen (10) vertikal bzw. seitlich ausgerichtet wird.

6. Hubladebühne nach einem der vorhergehenden Ansprüche, **dadurch gekennzeichnet, daß** die Tragelemente (12) und/oder die Führungselemente (13) jeweils eine obere Anlagefläche (25) zur Anlage an der Unterseite der Führungsschienen (10) aufweisen.

7. Hubladebühne nach einem der vorhergehenden Ansprüche, **dadurch gekennzeichnet, daß** die Tragelemente (12) und/oder die Führungselemente (13) jeweils an mindestens einer Seitenwand der Führungsschienen (10) geführt sind.

8. Hubladebühne nach einem der vorhergehenden Ansprüche, **dadurch gekennzeichnet, daß** die Tragelemente (12) und/oder die Führungselemente (13) zumindest an den mit den Führungsschienen (10) zusammenwirkenden Auflage- bzw. Anlagebereichen aus reibungsarmem Material, insbesondere aus Kunststoff, gebildet sind.

9. Hubladebühne nach einem der vorhergehenden Ansprüche, **dadurch gekennzeichnet, daß** die Tragelemente (12) und/oder die Führungselemente (13) um eine vertikale oder horizontale Achse drehbar gelagert sind.

10. Hubladebühne nach einem der vorhergehenden Ansprüche, **dadurch gekennzeichnet, daß** die Führungsschienen (10) jeweils nach unten offene C-Profile oder einander zugewandte L- oder U-förmige Profile sind.

## Claims

1. Retractable lifting loading platform (1) for fixing to a motor vehicle, with a parallelogram-shaped lift (2) for raising and lowering a platform, which can be folded together to form a platform pack (3), and with two parallel guide rails (10), from which the lift (2) is held suspended and can be driven between a stowage position and a working position, **characterised in that** at least two support elements (12) are provided on the upper side of the folded platform pack (3), which, in the stowed position of the lifting loading platform (1), are respectively held suspended from the two guide rails (10).

2. Lifting loading platform according to Claim 1, **characterised in that** the two support elements (12) are provided at the rear end of the folded platform pack (3).

3. Lifting loading platform according to the pre-characterising clause of Claim 1, **characterised in that** at least two guide elements (13) are provided on the upper side of the folded platform pack (3), which guide the platform pack (3) against the two guide rails (10) when the lifting loading platform (1) is driven into the stowage position.

4. Lifting loading platform according to Claim 3, **characterised in that** the two guide elements (13) are provided at the front end of the folded platform pack (3).

5. Lifting loading platform according to one of the preceding claims, **characterised in that** the support elements (12) and/or the guide elements (13) in each case have vertical and/or lateral guide chamfers (20; 21), by means of which, in each case, the lift (2) is aligned vertically or laterally respectively against the guide rails (10) when driving into the stowage position.

6. Lifting loading platform according to one of the preceding claims, **characterised in that** the support elements (12) and/or the guide elements (13) in each case have an upper bearing surface (25) for bearing against the underside of the guide rails (10).

7. Lifting loading platform according to one of the preceding claims, **characterised in that** the support elements (12) and/or the guide elements (13) in each case are guided against at least one side wall of the guide rails (10).

8. Lifting loading platform according to one of the preceding claims, **characterised in that** the support elements (12) and/or the guide elements (13) are formed from low-friction material, in particular from plastic, at least in the bearing areas which act on or against the guide rails (10).

9. Lifting loading platform according to one of the preceding claims, **characterised in that** the support elements (12) and/or the guide elements (13) are mounted so as to be able to rotate about a vertical or horizontal axis.

10. Lifting loading platform according to one of the preceding claims, **characterised in that** the guide rails (10) in each case are C-profiles open at the bottom or L-shaped or U-shaped profiles facing one another.

## Revendications

1. Hayon élévateur rétractable (1) destiné à être fixé sur un véhicule, comprenant un mécanisme de levage (2) en forme de parallélogramme, destiné à lever et à abaisser une plate-forme repliable en un paquet de plate-forme replié (3), et comprenant deux rails de guidage parallèles (10) sur lesquels le mécanisme de levage (2) est maintenu en suspension et déplaçable entre une position de rangement et une position de travail,
**caractérisé en ce que** sur la face supérieure du paquet de plate-forme replié (3) sont prévus au moins deux éléments porteurs (12) qui sont maintenus en suspension respectivement sur les deux rails de guidage (10) dans la position de rangement du hayon élévateur (1).

2. Hayon élévateur selon la revendication 1, **caractérisé en ce que** les deux éléments porteurs (12) sont prévus à l'extrémité postérieure du paquet de plate-forme replié (3).

3. Hayon élévateur selon le préambule de la revendication 1, **caractérisé en ce que** sur la face supérieure du paquet de plate-forme replié (3) sont prévus au moins deux éléments de guidage (13) qui guident le paquet de plate-forme (3) respectivement sur les deux rails de guidage (10) lors de la rétraction du hayon élévateur (1) jusque dans la position de rangement.

4. Hayon élévateur selon la revendication 3, **caractérisé en ce que** les deux éléments de guidage (13) sont prévus à l'extrémité antérieure du paquet de plate-forme replié (3).

5. Hayon élévateur selon l'une des revendications précédentes, **caractérisé en ce que** les éléments porteurs (12) et/ou les éléments de guidage (13) comportent chacun des fentes de guidage (20 ; 21) verticales et/ou latérales, au moyen desquelles le mécanisme de levage (2) est orienté verticalement ou latéralement respectivement sur les rails de guidage (10) lors du déplacement jusque dans la position de rangement.

6. Hayon élévateur selon l'une des revendications précédentes, **caractérisé en ce que** les éléments porteurs (12) et/ou les éléments de guidage (13) comportent respectivement une surface d'appui supérieure (25) pour l'appui contre la face inférieure des rails de guidage (10).

7. Hayon élévateur selon l'une des revendications précédentes, **caractérisé en ce que** les éléments porteurs (12) et/ou les éléments de guidage (13) sont respectivement guidés contre au moins une paroi latérale des rails de guidage (10).

8. Hayon élévateur selon l'une des revendications précédentes, **caractérisé en ce que** les éléments porteurs (12) et/ou les éléments de guidage (13) sont réalisés en matériau à faible friction, en particulier en matière plastique, au moins au niveau des zones d'appui ou de contact qui coopèrent avec les rails de guidage (10).

9. Hayon élévateur selon l'une des revendications précédentes, **caractérisé en ce que** les éléments porteurs (12) et/ou les éléments de guidage (13) sont montés en rotation autour d'un axe vertical ou horizontal.

10. Hayon élévateur selon l'une des revendications précédentes, **caractérisé en ce que** les rails de guidage (10) sont respectivement des profilés en forme de C ouverts vers le bas, ou de profilé en forme de L ou en forme de U tournés l'un vers l'autre.
